Europäisches Patentamt

European Patent Office

Office européen des brevets

(11) Publication number: **0 097 650**
**B1**

# EUROPEAN PATENT SPECIFICATION

(45) Date of publication of patent specification: **14.05.86**

(21) Application number: **82902179.9**

(22) Date of filing: **19.07.82**

International application number:
**PCT/FI82/00029**

International publication number:
**WO 83/00369 03.02.83 Gazette 83/04**

(51) Int. Cl.⁴: **F 16 L 59/00**

(54) **AN INSULATING BODY BASED ON MINERAL WOOL, AND A METHOD FOR ITS MANUFACTURE.**

(30) Priority: **22.07.81 FI 812298**

(43) Date of publication of application:
**11.01.84 Bulletin 84/02**

(45) Publication of the grant of the patent:
**14.05.86 Bulletin 86/20**

(84) Designated Contracting States:
**DE FR GB NL SE**

(56) References cited:
**DE-A-1 784 432**
**FI-C- 26 362**
**FI-C- 28 423**
**GB-A- 490 877**
**GB-A- 704 610**
**SE-B- 332 590**
**SE-C- 102 960**

(73) Proprietor: **Oy Partek Ab.**
**SF-28100 Parainen (FI)**

(72) Inventor: **TUOMISALO, Väinö, Akusti**
**Kierniemenraitti 2 A 12**
**SF-53850 Lappeenranta 85 (FI)**
Inventor: **JÄMSEN, Hannu Helmer**
**Tammihaantie 2 D 35**
**SF-02720 Espoo 72 (FI)**

(74) Representative: **Ford, Michael Frederick et al**
**MEWBURN ELLIS & CO. 2/3 Cursitor Street**
**London EC4A 1BQ (GB)**

Courier Press, Leamington Spa, England.

## Description

The present invention relates to an insulating body based on mineral wool, and to a method for its manufacture.

Insulating troughs made from various materials and, for example, mineral wool are used for the insulation of pipes, for example. Such troughs have usually been more or less soft, which means that the insulating material around the pipe cannot withstand being walked on; an insulation which can be walked on is a normal requirement in industrial plants.

There have, however, been developed calcium silicate based, fiber reinforced insulating troughs having a good compressive strength. Such insulating troughs are manufactured by mixing fibers with a calcium silicate slurry, whereafter the mix is cast in molds and cured in an autoclave. The compressive strength of the trough obtained is, as said, very good. Consequently, thinner than usual surface material, e.g. thin metal sheet, can be used around the trough. However, the disadvantages of the troughs include on the one hand an expensive manufacturing method and on the other hand the brittleness of the cured insulating material. The insulating trough fractures easily during handling. Also, the conductivity factor of the insulating trough is higher than that of mineral wool based insulants.

Also known are so-called rockwool bricks, which have a high compressive strength. They are manufactured by mixing fluffed rockwool with clay slurry and by taking up the thereby obtained mix onto a rotating drum by means of a vacuum, whereby it at the same time is pre-dried by suction to a moisture content of approx. 65%. The layer is removed from the drum pressed into the form of a board, cut to suitable dimensions, and dried in a furnace. The advantages of the method are that an insulating product having a high compressive strength is obtained and that an inexpensive mineral wool can also be used for raw material, and thus the method is economical. Its disadvantages are that the conductivity factor of the product is considerably higher than that of a conventional mineral wool product, and that the product is heavy, i.e. its bulk density is approx. 200—300 kg/m$^3$.

GB—A—490877, which is equivalent to SE-102960, describes a glass fibre heat insulating material in which a powdered substance is caused to adhere to the glass fibres to prevent heat transmission by radiation from fibre to fibre. One of the powdered substances mentioned in this document is bentonite clay. It is mentioned in GB—A—490877 that a very small amount may be used and it is also mentioned that a possible way to cause it to adhere to the fibres is to incorporate it into an emulsion of oil, water and soap. Details of the glass fibre material are not given: there is however no suggestion of achieving any properties other than reduced radiated heat transmission. Nothing is suggested touching on the compressive strength.

GB—A—704610 and DE—A—1784432 both disclosed felted mineral webs in which the fibres are randomly crossing each other. The object of GB—A—704610 is to improve the production of mineral wool webs while the object of DE—A—1784432 is to improve the sound insulating properties of such a web. In both documents it is taught that a binding agent should be drawn into the felted mineral webs by suction, with one side of the web being subjected to vacuum and the other side contacted with the binding agent. After impregnation with the binding agent the bodies are dried and hardened by heat.

The present invention provides a tubular or board-like insulating body based on mineral wool. This body is, as is known per se, bonded by means of an organic bonding agent and has its fibres oriented so as to extend mainly perpendicularly to the radius if the body is tubular or mainly parallel to the main planes of a board-like body. The bodies of the present invention are characterised in that the body contains clay material up to 40% by weight, which gives the body an enhanced compressive strength with a compression of 5% of up to 120 kN/m$^2$, and has a heat conductivity value of 0,032—0,048 W/mK.

Thus, the mineral wool fibres contained in the product of the present invention are orientated in the best possible manner for preventing the transfer of heat and the clay material serves to improve the compressive strength.

An insulating body according to this invention can be made by applying vacuum to one side of a mineral wool body to be impregnated with clay and contacting the opposite side with a clay slurry in order to saturate the mineral wool with clay slurry, whereafter the saturated mineral wool body is dried at an elevated temperature.

When the method is applied to the manufacture of tubular insulating bodies, a tubular mineral wool body to be impregnated is placed around a perforated core and immersed in a clay slurry in a vessel, and the core is connected to a source of vacuum in order to cause clay slurry to be absorbed into the mineral wool body, whereafter the impregnated mineral wool body is removed from the core and dried at an elevated temperature.

When the method is applied to the manufacture of board-like insulating bodies, a mineral wool board to be impregnated is placed in a vessel provided with a perforated tray so as to be supported by the tray, the vessel is filled with clay slurry up to a point above the mineral wool board, and a vacuum is created under the tray in order to cause the clay slurry to be absorbed into the mineral wool board, whereafter the impregnated mineral wool board is removed from the vessel and dried at an elevated temperature.

In each case, the clay slurry sucked through the mineral wool piece can be recycled into the vessel.

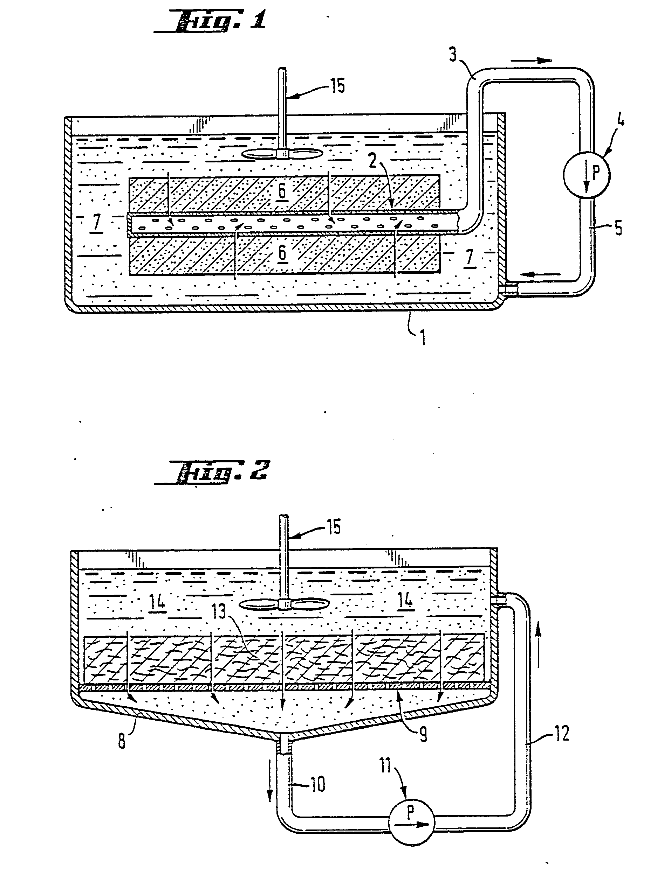

In the accompanying drawing, Figure 1 depicts schematically the manufacture of an insulating trough by the above method and Figure 2 depicts in a corresponding manner the manufacture of a board-like insulating body.

In the drawing, 1 indicates a vessel in which a perforated core 2 can be placed; the core is connected by means of conduit 3 to a pump 4 which creates a vacuum. A tubular piece 6 shaped from mineral wool in a manner known *per se* is placed around the core 2, clay slurry 7 is introduced into the vessel 1, and the pump 4 is started, whereupon clay slurry is absorbed into the mineral wool body in a very short time. When a vacuum of approx. 0.5 bar is used, the impregnation time is about 10 s. From the pump 4 the clay slurry can be returned to the vessel 1 via a pipe 5. After the impregnation the mineral wool body is removed from the core and dried in a furnace at an elevated temperature, which can advantageously be approx. 200°C.

In the embodiment depicted in Figure 2, the vessel 8 is provided with a perforated tray 9. That part of the vessel 8 which is below the tray 9 is connected by conduit 10 to a pump 11 which creates a vacuum. A board-like mineral wool body 13 made in a manner known *per se* is placed on top of the tray 9, clay slurry 14 is fed into the vessel up to a point above the board 13, and the pump 11 is started, whereby clay slurry is absorbed into the board 13. In this case also, the clay slurry can be returned from the pump 11 via a conduit 12 into that part of the vessel 8 which is above the tray 9. After the impregnation the mineral wool board 13 is removed and dried in a furnace in the manner described above.

Depending on the dimensions of the tubular mineral wool body to be manufactured, cores of the corresponding size must, of course, be used.

One clay material suitable for use in the invention is bentonite. The concentration of the slurry being absorbed, i.e. its bentonite content, or the amount of the slurry can be used for affecting the bentonite content of the completed product, which for its part has a direct effect on the compressive strength of the product.

However, the viscosity of the slurry sets a limit on the bentonite content, since viscosity for its part sets a limit on the absorption of the slurry into mineral wool. If the viscosity is too high, a sediment of bentonite is formed on the surface of the mineral wool, and this layer prevents further absorption of slurry into the mineral wool, and furthermore, the body of mineral wool may collapse owing to the vacuum prevailing inside or below it.

After the preparation of the slurry the viscosity of the bentonite slurry rises to close to its maximum value in approx. 10 hours. However, the increase in viscosity can be prevented by agitating the slurry continuously. An increased viscosity can also be caused to fall to its initial value by agitation. For this reason it is advantageous to stir the bentonite slurry in the vessel, and this is illustrated in Figures 1 and 2 by a schematically shown propeller 15.

Taking the above viewpoints into consideration, the bentonite content of the slurry to be used may be at maximum 10 percent by weight, in which case the water content may be respectively approx. 88—90 percent by weight. In addition, the slurry may contain a bonding agent such as phenol formaldehyde, its amount being preferably at maximum 2 percent by weight, an anti-foaming agent, the amount of which is preferably at maximum 1 percent by weight, and an agent such as boric acid, which increases the strength of the final product, the amount of this agent being preferably at maximum 0.5 percent by weight. The amounts given for the additives correspond to the presented maximum limit for the bentonite content, and they vary in proportion to the bentonite content. The slurry is prepared in such a way that water is added to boric acid, thereafter the bentonite is mixed with the water and, for example, after half an hour's stirring the anti-foaming agent is added, and finally the bonding agent is added.

Since a mineral wool body made in advance is used in the method according to the invention, the fibers serve as a good supporting structure for the product, and the orientation of the fibers is more advantageous in terms of heat conductivity than it is in previously known products made from a mix. The continuous fiber network which serves as a frame is also a significant improvement in terms of the bending strength of the product, as compared with a product made from a mix. The bulk density of the mineral wool piece used in the method according to the invention may vary within a rather wide range, for example 70—180 kg/m$^3$.

The addition of clay to the mineral wool increases not only the compressive strength of the product but also its resistance to heat. The organic bonding agent used in conventional mineral wool insulants burns off at a temperature as low as approx. 250°C, but a product made by the method according to the invention resists temperatures up to 800°C at least.

Insulating troughs were made in the manner described above using bentonite slurry for the impregnation. The bentonite content and viscosity of the bentonite slurry used, the density of the mineral wool used as raw material, and the bentonite content, compressive strength, heat conductivity and density of the obtained final product are given in the table below.

TABLE

| Bentonite slurry | | | Final product | | | |
|---|---|---|---|---|---|---|
| Bentonite content % by weight | Viscosity cP | Mineral wool density kg/m$^3$ | Bentonite content % by weight | Compressive strength F5% kN/m$^2$ | Heat conductivity $\lambda_{10}$ W/mK | Density kg/m$^3$ |
| 2 | 2 | 143 | 9.3 | 26 | 0.0371 | 157 |
| 4 | 4 | 154 | 22 | 73 | 0.0439 | 196 |
| 7 | 45 | 147 | 32 | 103 | 0.0451 | 216 |
| 9 | 55 | 152 | 35 | 113 | 0.0480 | 208 |
| 7 | 45 | 115 | 32 | 14 | 0.0413 | 168 |

## Claims

1. A tubular or board-like insulating body based on mineral wool, said body being bonded by means of an organic bonding agent and wherein in a tubular body the fibres are oriented mainly perpendicularly to the radius and in a board-like body mainly parallel to the main planes of the board, characterised in that the body contains clay material up to 40% by weight, which gives the body an enhanced compressive strength with a compression of 5% of up to 120 kN/m$^2$, and has a heat conductivity value of 0,032—0,048 W/mK.

2. An insulating body according to claim 1, wherein the clay material is bentonite.

3. A method of making an insulating body according to claim 1 or claim 2, comprising applying a vacuum to one side of a mineral wool body (6, 13), which body is bonded by means of an organic bonding agent and wherein in a tubular body the fibres are oriented mainly perpendicularly to the radius and in a board-like body mainly parallel to the main planes of the board, and contacting the opposite side of the body with a clay slurry (7, 14) in order to impregnate the mineral wool with the clay slurry, whereafter the impregnated mineral wool body is dried at an elevated temperature to produce a body according to claim 1 or claim 2.

4. A method according to claim 3 for the manufacture of tubular insulating pieces, wherein a tubular mineral wool body (6) to be impregnated is placed around a perforated core (2) and immersed in clay slurry in a vessel (1), and the core is connected to a source of vacuum (4) in order to cause the clay slurry to be absorbed into the mineral wool body, whereafter the impregnated mineral wool body is removed from the core and dried at an elevated temperature.

5. A method according to claim 3 for the manufacture of a board-like insulating body, wherein a mineral wool board (13) to be impregnated is placed in a vessel (8) having a perforated tray (9) so as to be supported by this tray in such a manner that it mainly covers the entire tray, the vessel is filled with clay slurry so as to cover the mineral wool board, and a vacuum is created under the tray in order to cause the clay slurry to be absorbed into the mineral wool board, whereafter the impregnated mineral wool board is removed and dried at an elevated temperature.

6. A method according to claim 4 or claim 5 wherein clay slurry sucked through the mineral wool body is returned to the vessel.

7. A method according to any of claims 3 to 6 wherein the clay slurry is stirred during the impregnation.

## Patentansprüche

1. Hülsen- oder tafelförmiger Isolierkörper auf Mineralwollbasis, gebunden mittels eines organischen Bindemittels, wobei die Fasern in einem hülsenförmigen Körper hauptsächlich senkrecht zum Radius, und in einem tafelförmigen Körper hauptsächlich parallel zu den Hauptebenen der Tafel ausgerichtet sind, dadurch gekennzeichnet, daß der Körper Tonmaterial bis zu 40 Gewichtsprozent enthält, das dem Körper eine verbesserte Druckfestigkeit bei einer Kompression von 5% bis zu 120 kN/m$^2$ sowie eine Wärmeleitfähigkeit von 0,032—0,048 W/mK gibt.

2. Isolierkörper nach Anspruch 1, dadurch gekennzeichnet, daß das Tonmaterial Bentonit ist.

3. Verfahren zum Herstellen eines Isolierkörpers gemäß Anspruch 1 oder Anspruch 2 unter Aufbringen von Vakuum auf eine Seite eines Mineralwollkörpers (6, 13) der mit einem organischen Bindemittel gebunden ist, wobei die Fasern in einem hülsenförmigen Körper hauptsächlich senkrecht zum Radius, und in einem tafelförmigen Körper hauptsächlich parallel zu den Hauptebenen der Tafel ausgerichtet sind und die gegenüberliegende Seite des Körpers berühren, mit einer Tonaufschlemmung (7, 14) zum Imprägnieren der Mineralwolle hierin, wonach der imprägnierte Mineralwollkörper bei höherer Temperatur getrocknet wird, um einen Körper gemäß Anspruch 1 oder Anspruch 2 zu ergeben.

4. Verfahren nach Anspruch 3 zum Herstellen von hülsenförmigen Isolierteilen, wobei ein zu imprägnierender hülsenförmiger Mineralwollkörper (6) um einen perforierten Kern (2) angeordnet und in einem Gefäß (1) in eine Tonaufschlemmung eingetaucht wird, und wobei der Kern an eine Vakuumquelle (4) angeschlossen wird, um die Ton-Aufschlemmung vom Mineralwollkörper absorbieren zu lassen, wonach der imprägnierte Mineralwollkörper vom Kern entfernt und bei höherer Temperatur getrocknet wird.

5. Verfahren nach Anspruch 3 zum Herstellen eines tafelförmigen Isolierkörpers, wobei eine zu imprägnierende Mineralwolltafel (13) in ein Gefäß (8) mit einem perforierten Tablett (9) verbracht wird, um von diesem Tablett derart getragen zu werden, daß er im wesentlichen das gesamte Tablett bedeckt, wobei das Gefäß mit Tonaufschlemmung angefüllt ist, um die Mineralwolltafel zu bedecken, und ein Vakuum unterhalb des Tabletts erzeugt wird, damit die Tonaufschlemmung von der Mineralwolltafel absorbiert wird, worauf die imprägnierte Mineralwolltafel entfernt und bei höherer Temperatur getrocknet wird.

6. Verfahren nach Anspruch 4 oder Anspruch 5, wobei die Tonaufschlemmung, die durch den Mineralwollkörper hindurchgesaugt wurde, in das Gefäß wieder zurückgeführt wird.

7. Verfahren nach einem der Ansprüche 3 bis 6, wobei die Tonaufschlemmung während des Imprägnierens ungerührt wird.

**Revendications**

1. Corps isolant tubulaire ou semblable à un panneau à base de laine minérale, lequel corps est lié au moyen d'un agent liant organique et dans lequel, s'il s'agit d'un corps tubulaire, les fibres sont orientées principalement perpendiculairement au rayon et, s'il s'agit d'un corps semblable à un panneau, principalement parallèlement aux plans principaux du panneau, caractérisé en ce que le corps contient une matière argileuse jusqu'à 40% en poids au maximum, ce qui donne au corps une résistance à la compression accentuée avec une compression de 5% jusqu'à 120 kN/m$^2$, et a une valeur de conductibilité thermique de 0,032 à 0,048 W/mK.

2. Corps isolant selon la revendication 1, caractérisé en ce que la matière argileuse est de la bentonite.

3. Procédé de fabrication d'un corps isolant selon l'une quelconque des revendications 1 et 2, caractérisé en ce qu'il consiste à appliquer un vide d'un côté d'un corps de laine minérale (6, 13), lequel est lié au moyen d'un agent liant organique et dans lequel, s'il est sous la forme d'un corps tubulaire, les fibres sont orientées principalement perpendiculairement au rayon et, s'il est sous la forme d'un corps semblable à un panneau, principalement parallèlement aux plans principaux du panneau, et à mettre en contact le côté opposé au corps avec une bouillie d'argile (7, 14) afin que la laine minérale soit imprégnée de la bouillie d'argile, et à sécher ensuite le corps de laine minérale imprégné à une température élevée pour produire un corps suivant l'une quelconque des revendications 1 et 2.

4. Procédé selon la revendication 3 pour la fabrication de pièces isolantes tubulaires, caractérisé en qu'un corps tubulaire de laine minérale (6) à imprégner est disposé autour d'un noyau perforé (2) et immergé dans la bouillie d'argile d'une cuve (1) et en ce que le noyau est relié à une source de vide (4) en vue de contraindre la bouillie d'argile a être absorbée dans le corps de laine minérale et le corps de laine minérale imprégné est ensuite séparé du noyau et séché à une température élevée.

5. Procédé selon la revendication 3 pour la fabrication d'un corps isolant semblable à un panneau, caractérisé en ce qu'un panneau de laine minérale (13) est introduit dans une cuve (8) pourvue d'un plateau perforé (9) de façon à être soutenu par ce plateau de telle sorte qu'il couvre principalement le plateau entier; en ce que la cuve est remplie de bouillie d'argile de manière à couvrir le panneau de laine minérale et en ce qu'un vide est créé en dessous du plateau afin de contraindre la bouillie d'argile à être absorbée dans le panneau de laine minérale, ledit panneau de laine minérale étant ensuite retiré et séché à une température élevée.

6. Procédé selon l'une quelconque des revendications 4 et 5, caractérisé en ce que la bouillie d'argile aspirée à travers le corps de laine minérale est ramené à la cuve.

7. Procédé selon l'une quelconque des revendications 3 à 6, caractérisé en ce que la bouillie d'argile est agitée durant l'imprégnation.

# Fig. 1

# Fig. 2